# EUROPEAN PATENT APPLICATION

(11) **EP 1 988 344 A1**
(43) Date of publication of application: **05.11.2008**
(21) Application number: 07704760.3
(22) Date of filing: 31.01.2007
(51) Int. Cl.: F24J 2/52, H01L 31/042

(54) **DYNAMIC SOLAR TRACKING SYSTEM**

(30) Priority: 21.02.2006 ES 200600408
(71) Applicant: Er Automatización, S-A., 02600 Villarrobledo (Albacete) (ES); Parcitank, S.A., 02600 Villarrobledo (Albacete) (ES)
(72) Inventor: PARRA CEBRIAN, E-02600 VILLARROBLEDO (ALBACETE) (ES); ROJAS GÓMEZ, Manuel, E-02600 VILLARROBLEDO (ALBACETE) (ES)
(74) Representative: Manzano Cantos, Gregorio
(86) International application number: PCT/ES2007/000051
(87) International publication number: WO 2007/096439

(57) **Abstract**

The invention relates to a dynamic solar tracking system for making optimal use of solar energy by means of panels of photovoltaic or thermal plates, in which a modular tracker adopting the configuration of a main beam which can be aligned with others of an identical nature is developed, this assembly of main beams being able to pivot with respect to its longitudinal axis, each of these beams being formed by a variable number of modules formed by profiles which as a whole provide each beam with a configuration by way of a tetrahedron mesh, and in each of which there is assembled a secondary beam structure for supporting the panels of plates, this secondary structure being supported by two side supports with respect to which it can rotate with respect to an axis transverse to the longitudinal direction of the main beams. The assembly incorporates control means for the automatic orientation of the panels, and a weather station for providing information to the control means.

## Description

### Object of the Invention

The present invention relates to a dynamic solar tracking system providing essential novelty features and considerable advantages with respect to the known means used for the same purposes in the current state of the art.

More specifically, the invention proposes the development of a solar tracker implemented around a modular beam structure according to its longitudinal direction, which structure can rotate about its longitudinal axis and is formed of profiles joined in a tetrahedron mesh and in which other structures or panels containing solar plates are supported, which structures or panels also pivot with respect to an axis transverse to the length of the beam. The assembly includes a control system prepared to act on the beam and the structures supporting the panels, such that said solar plates are automatically maintained in an optimal solar receiving position for a maximum energy generation.

The field of application of the invention is obviously comprised within the industrial sector dedicated to the construction of installations for renewable energies, especially for making use of solar energy.

### Background and Summary of the Invention

The persons skilled in the art are aware of the progressive evolution experimented by renewable energies for a making a more complete use thereof, and for an increasingly greater impact on the consumer market. In this sense, the Renewable Energy Promotion Plan in Spain for 2000-2010, according to Law 54/1997 of November 27, of the electric sector, sets forth objectives by areas which allow reaching, in 2010, the objective of the renewable energy sources covering at least 12% of the total primary energy demand.

To date, three renewable sources have developed in a manner that can be considered satisfactory: wind, biofuels and biogas. Solar energy, however, is developing a considerably at a considerably slower rhythm than that necessary for reaching final objectives.

The production of electric energy directly by means of the photovoltaic effect has unquestionable energetic, industrial, environmental and social advantages, etc. Among them, the widest possible implementation of photovoltaic solar energy will contribute to promoting future technological development leading this electric generation process to terms that are increasingly competitive against other forms of power generation, because the main barriers for the development of photovoltaic solar energy are economic barriers, with the subsequent limitation to its development.

The objective of the mentioned Renewable Energy Plan is to increase the photovoltaic power by 363 MWp in the 2005-2010 period.

Spanish industry has recently carried out a considerable effort in technological, business and industrial development, the main innovation lines being the following:
- The development of raw material, for the construction pf solar cells, because one of the obstacles faced by the sector is the lack of raw material (solar grade silicon), and
- The development of concentration modules which allow reaching considerably higher efficiency levels, both in static system without solar tracking and in dynamic systems with solar tracking in one or two concentration axes.

As is known, in current equipment or trackers for the production of solar energy, there are photovoltaic plates assembled in a "single" panel or structure, the maximum energy capture of which occurs when it is arranged in a position perpendicular to the sun rays, with movement according to two axes: a vertical rotation axis whereby the inclination of the panel is carried out, and another angular rotation axis for the orientation of the sun according to the season.

A panel of this type covers a certain energy capture area and is normally supported by a structure of transverse and perpendicular beams forming an assembly resting on a beam or monopost with a considerable height or a structure with several support points.

The structure or panel on which the photovoltaic plates are assembled is supported on a single horizontal rotating base arranged on a tower or monopost beam on which it rotates by the action of a certain actuating mechanism (for example, a geared motor). The tower or beam is inserted in a concrete shoe buried in the ground, and houses the automatic control systems for controlling the movements of the panel, the control equipment for controlling the current and electrical protections, as well as other necessary elements for its correct operation.

Depending on the surface of the single panel of the tracker (which is limited by the actions of the weight of the elements forming it and of the wind forces), a certain number of trackers which allow gathering the desired electric power is placed in an installation. This forces placing the trackers with a predetermined optimal separation therebetween, such that the solar energy losses due to shading are minimized. As a general rule, the more the trackers are separated from one another, the lower are the solar energy losses occurring between them due to shadows. This involves occupying a certain area of land according to the number of trackers to be installed.

On the other hand, the greater the number of installed trackers, the greater is the number of control equipment for controlling the movement of the tracker which must be installed, apart from the control equipment for controlling the mains current quality, electrical protections, wiring installations and the greater is the number of mechanical, electric and foundation assemblies.

If the surface of the panel is chosen to be increased so as to be able to reduce the number of trackers, there is the drawback of having to install more resistant and heavier structures which allow ensuring stability with respect to wind, which inevitably affects the cost, the optimization of the movements of the tracker, and an increase of the separation between trackers to minimize the losses due to shading.

Taking into consideration the problems existing in relation to the solar energy generation installations of the current state of the art, the main objective of the present invention is the design and construction of a dynamic solar tracking system, for the incorporation of photovoltaic or thermal panels, whereby solutions are provided that effectively solve the situation set forth. This objective has been completely met by means of the system which is described below, the main features of which are gathered in the characterizing part of the attached claim 1.

The tracker is essentially structured around a pivoting beam and a control system acting on two or more actuation mechanisms with the function of arranging the panels with an optimal orientation with respect to the impinging sun rays, i.e., always looking for the perpendicularity thereto, such that the maximum energy production can be obtained. The mentioned pivoting beam adopts a parallelepiped shape formed by profiles which are joined in a tetrahedron mesh, and it has a modular structure as regards length. Said beam rotates with respect to its longitudinal axis.

Other structures or panels containing solar plates are assembled on one side of the parallelepiped beam, which structures or panels also pivot with respect to an axis transverse to the length of the beam.

The mentioned beam is supported on two supports, one on each end, which keep it raised to a certain height and which form pivoting supports. The same support can be used to support more than one beam.

For its part, the control system acts on the actuations of the beam and of the structures containing the panels, carrying out the sun tracking movements, an azimuth movement between sunrise and sunset, and another zenith movement between the horizon and the highest position of the sun, placing the panels perpendicular to the sun at all times and thus capturing the maximum amount of energy.

The control system will preferably be a computer system, although this feature must not be understood as limiting, given that other control systems other than computer applications are also possible.

As will be understood, the system proposed by the invention provides an effective solar tracking means for an optimal efficiency of the energy installation, solving the different drawbacks of the installation known in the state of the art and which have been summarily mentioned in the previous description.

### Brief Description of the Drawings

The previous and other features and advantages of the invention will be more clearly shown in the following detailed description of a preferred embodiment, given only by way of an illustrative and non-limiting example, with reference to the attached drawings, in which:
Figure 1 shows a general schematic view of a modular tracker constructed according to the present invention;
Figure 2 shows a larger, more detailed view of a portion of the tracker of Figure 1, and
Figure 3 shows a schematic elevational end view of the tracker of Figure 1.

### Description of a Preferred Embodiment

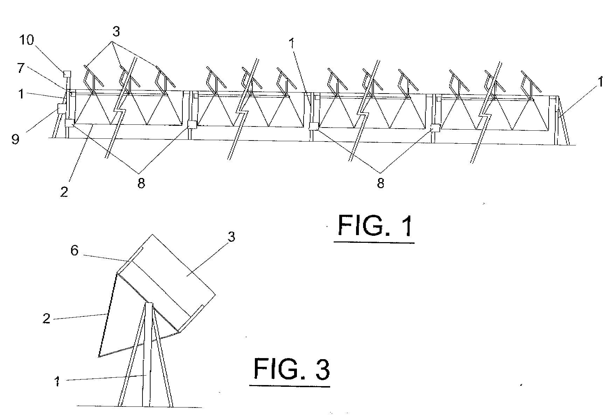

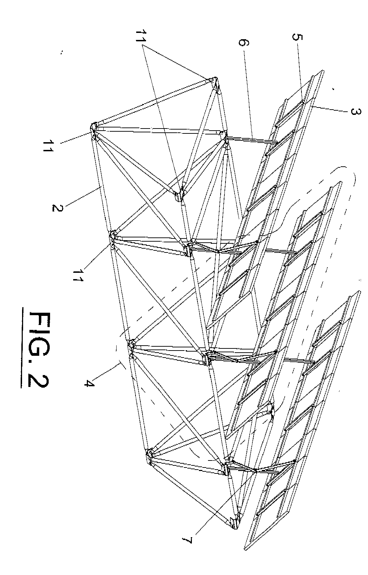

As has been indicated in the foregoing, the detailed description of the preferred embodiment of the invention will be carried out below with the aid of the attached drawings, in which the same reference numbers are used to designate identical or similar parts. Thus, considering first the illustration of Figure 1, a schematic elevational view of a tracker designed and constructed according to the invention can be seen, which tracker is formed by pivoting beams 2 with one degree of freedom which are supported by two supports 1 at the end, the intermediate supports 1 being useful for supporting two beams, thus facilitating the successive and repetitive installation of the beams in respectively aligned positions. As can be seen in more detail in the illustration of Figure 2, each beam 2 is in turn formed by multiple modules 4 placed following the longitudinal dimension thereof; each of such modules adopts a tetrahedral configuration which is coupled to the immediately previous and next modules with the aid of intermediate parts forming joining nodes 11. Each of the modules 4 incorporates a respective photovoltaic panel or plate 3, each of these plates being supported by a beam structure 5 holding it, and each of these structures 5 being able to rotate about an axis transverse to the longitudinal direction of the beam 2, thanks to the supports 6 installed in the main beam 2. In the same way, a single movement mechanism 7 has been provided to make all the panels 3 associated to a main beam 2 rotate with respect to their axis, and thus be able to tilt the capturing surface 3 and therefore the position of the plates with respect to the sun. The swinging of the main beam 2 with respect to its longitudinal axis with all the panels of photovoltaic plates 3 is carried out by means of rotation mechanism 8 acting on said main beam 2, thus orienting the panels of photovoltaic plates 3. The mentioned rotation mechanism 8 is installed in one of the supports 1, whereas the control equipment 9 is also installed in one of the supports, allowing to control the movement mechanism 7 and the rotation mechanism 8 acting at all times on the capturing surface, keeping it at all times oriented perpendicularly to the impinging sun rays such that the maximum solar energy is captured throughout the day according to the latitude in which the tracker or set of trackers is installed, the date and time of day, or according to an optical sensor.

As will be understood, with a tracker based on a beam 2 formed by modular elements 4 such as those described, the length of the beam can be adapted to different needs, according to the number of modules of photovoltaic or thermal panels that are desired to form the solar tracker.

The invention has also provided the inclusion of a weather station 10 located on one of the supports 10, whereby information is generated that is supplied to the control system 9 and allows the latter to position the tracker with the suitable orientation for a greater electric production or for its protection against climate agents.

The control equipment 9 is additionally designed such that it allows positioning the panels of the plates 3 in positions that are easy to clean or to prevent snow accumulation or to protect them against vandalism; it also allows placing the panels oriented towards the east at night, waiting for the sunrise in this position and according to the position of the sun in the previous days.

Figure 3 is a schematic elevational end view of the assembly which shows the main beam 2 with the supports 6 of the structures of panels 3, which beam is supported by side supports 1 at a predetermined distance from the ground or another supporting surface, this distance being enough to allow a perfect tilting of the main beam 2 with respect to its longitudinal axis as described previously, and the total rotation capacity of which can be about an angle of about 180°, actuated by means of a geared motor (not specifically shown).

Many considerable advantages with respect to conventional installations are obtained with a tracking system like the one described, including the following:
- The possibility of installing more than one panel on a tracker, increasing the capturing surface to levels higher than the current trackers;
- A tracker secured to two supports instead of a monopost, achieving more stability with respect to wind;
- Need for less land to install a certain electric power, due to the fact that more than one panel of plates is assembled on a tracker or set of trackers, and due to its position, the need of having separations between trackers to minimize the effects of energy losses occurring between several trackers is prevented;
- Less amount of foundations because a lower number of supports is need for the same installed power;
- Easy to design and adjust the electric power of the tracker to the needs of the installation, since it is modular and the number of panels of plates which can be installed in a tracker can thus be modified;
- Easy assembly of the elements forming a tracker, since a complete kit with the elements making up the tracker is formed, preventing welded joints, being simply screwed joints or easy to carry out joints;
- Greater stability to wind, given that the individual surfaces of a panel of plates are smaller than the surface of a panel of plates of a monopost tracker or the like; there is further enough separation between panels of plates so as to prevent the wind pressure of a panel from affecting another panel;
- Lower cost in the installation on the ground of mechanical, electric, and public work elements since there is a smaller number of trackers to be installed for the same electric power;
- Modular and extendable installation of the tracker;
- Smaller number of control equipment necessary for both controlling the movements of the two axes of the tracker and for controlling the quality of electric production to the network (smaller number of inverters although they have a greater power);
- Single computer control for a production plant of a certain power, with the capacity to indicate the situation of all the trackers forming the set of trackers, without needing to install a computer control for each tracker;
- The possibility of installing concentrators or thermal panels instead of, or in addition to, the photovoltaic panels;
- Safety systems for climate effects, wind and hail.

It is not considered to be necessary to extend the content of this description for a person skilled in the art to understand its scope and the advantages derived from the invention, as well as to develop and put the object thereof into practice.

Nevertheless, it must be understood that the invention has been described according to a preferred embodiment thereof, therefore it can be modified without this entailing any alteration of the essence of said invention, said modifications being able affect the shape, size and/or the manufacturing materials.

## Claims

1. A dynamic solar tracking system for making optimal use of the solar energy impinging on the photovoltaic and/or thermal panels forming the installation, **characterized in that** it consists of the formation of one or more main beams (2) supported by means of supports (1) in relation to the ends of the beams, and making use of the same support (1) for supporting two adjacent aligned beams (2) at the consecutive ends, each main beam (2) being modular and formed by a predetermined number of modules (4) which are successively coupled to one another throughout the length of the beam with the aid of joining nodes (11), and each module (4) consisting of profiles joining together to adopt a configuration by way of a tetrahedron mesh, in each of which profiles there is supported a beam structure (5) supporting a solar plate holding a panel containing the photovoltaic-type (or where appropriate, thermal-type) plates (3), the mentioned structures (5) for supporting the panels of plates (3) being extended transversely to the longitudinal axis of the main beam or succession of main beams, each of said beam structures (5) being supported by two end supports linked to the corresponding main beam (2) in a swinging manner, rotating according to an axis transverse to the beam, for the purpose of providing a first degree of freedom, and the main beam or beams (2) being able to pivot with respect to the points for the fastening to the end support elements (1) according to the longitudinal axis of the main beam or beams, thus providing a second degree of freedom which together with the first one, allow a precise direction of the mentioned panels of plates (3) in relation to the optimal perpendicularity with the impinging sun rays.

2. A system according to claim 1, **characterized in that** it comprises a single movement mechanism (7) for the rotation of all the panels (3) installed in relation to the same main beam (2), for the purpose of tilting the capturing surface (3) with respect to the position of the sun.

3. A system according to claims 1 and 2, **characterized in that** it comprises the incorporation of a mechanism (8) acting on the main beam (2) for the purpose of making it swing with respect to its longitudinal axis during the movement for orienting the panels (3).

4. A system according to claims 1 to 3, **characterized in that** it includes computerized control means (9) for monitoring the movements of the tracker and the perfect automatic orientation of the panels (3).

5. A system according to claims 1 to 4, **characterized in that** it further includes the installation of a weather station (10) whereby information is provided to the control means (9) with a view to an optimal positioning of the panels (3) or for its protection against climate effects.

6. A system according to claims 1 to 5, **characterized in that** the main beam or beams (2) are fixed to the end supports (1) at a height such that it allows the obstacle-free swinging of said beam or beams through an angle of an amplitude close to 180°.
